# EUROPEAN PATENT APPLICATION

(11) **EP 4 834 679 A1**
(43) Date of publication of application: **04.11.2026**
(21) Application number: 25172875.4
(22) Date of filing: 28.04.2025
(51) Int. Cl.: B60T 8/172, B60T 8/1763

(54) **A METHOD FOR OPERATING A BRAKE ASSISTANCE SYSTEM OF A VEHICLE**

(71) Applicant: Zenseact AB, 417 56 Gothenburg (SE)
(72) Inventor: SANDBLOM, Fredrik, 431 66 Mölndal (SE); KHORSAND VAKILZADEH, Majid, 417 62 Göteborg (SE)
(74) Representative: Zacco Sweden AB

(57) **Abstract**

The disclosed technology at least partly relates to a computer-implemented method for operating a brake assistance system of a vehicle. The method (100) comprises, in response to a driver-requested braking being initiated by the driver, obtaining (S102) a predicted braking profile of the driver-requested braking; obtaining (S104) friction data indicative of an available friction in an area of the vehicle; determining (S106) that the driver-requested braking will reach a limit of the available friction at a first point in time, based on a comparison between the friction data and the predicted braking profile, and causing (S108) the brake assistance system to increase a brake force of the driver-requested braking, ahead of the first point in time.

## Description

### TECHNICAL FIELD

The present disclosed technology relates to the field of automated driving systems. In particular, it is related to methods and devices for operating a brake assistance system of a vehicle.

### BACKGROUND

Safe vehicle operation in various driving conditions depends significantly on the effectiveness of braking systems, particularly in adverse weather and road conditions. Slippery road surfaces caused e.g. by rain, snow, ice, or loose gravel can severely impact vehicle stability and braking performance, increasing the risk of incidents. Drivers often struggle to judge the appropriate braking force required to maintain control while avoiding skidding or extended stopping distances, particularly when transitioning between slippery and non-slippery areas.

Modern vehicles are equipped with advanced braking assistance technologies such as Anti-lock Braking Systems (ABS), Electronic Stability Control (ESC), and Emergency Braking Systems (EBS). The ABS can for instance help mitigate the effects of slippery surfaces by modulating brake force to prevent wheel lock-up, thereby maintaining steering control. However, these systems have limitations - when there is too little friction, the resulting speed reduction is nevertheless restricted. There is therefore a need for new and improved solutions for assisting drivers in braking, in particular during slippery conditions.

### SUMMARY

The disclosed technology seeks to mitigate, alleviate or eliminate one or more of the above-identified deficiencies and disadvantages in the prior art to address various problems relating to braking assistance technologies. As realized by the inventors, existing systems such as Anti-lock Braking Systems (ABS) primarily react to loss of grip rather than proactively assisting the driver in adjusting braking behavior before loss of grip occurs. The disclosed technology provides a solution to mitigate this problem by predicting whether a user requested braking will reach a limit of the available friction (and thus trigger an ABS intervention), and if so, ramp up the deceleration faster than what the user request would have rendered, to as soon as possible reach the friction limit. Thereby the effective speed reduction can become larger than what otherwise would have been achieved. This can thus help in compensating for a braking effect expected by the driver, but which is not attainable given the available friction. Put differently, the speed reduction is proportionate to available friction and the brake application time, and since the friction cannot be improved, the disclosed technology instead seeks to maximize the time brakes are applied.

Various aspects and embodiments of the disclosed technology are defined below and in the accompanying independent and dependent claims.

According to a first aspect, there is provided a computer-implemented method for operating a brake assistance system of a vehicle. The method comprises, in response to a driver-requested braking being initiated by the driver, obtaining a predicted braking profile of the driver-requested braking. The method further comprises obtaining friction data indicative of an available friction in an area of the vehicle. The method further comprises determining that the driver-requested braking will reach a limit of the available friction at a first point in time, based on a comparison between the friction data and the predicted braking profile. The method further comprises causing the brake assistance system to increase a brake force of the driver-requested braking, ahead of the first point in time. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for operating a brake assistance system of a vehicle. The computing device comprises control circuitry. The control circuitry is configured to, in response to a driver-requested braking being initiated by the driver, obtain a predicted braking profile of the driver-requested braking. The control circuitry is further configured to obtain friction data indicative of an available friction in an area of the vehicle. The control circuitry is further configured to determine that the driver-requested braking will reach a limit of the available friction at a first point in time, based on a comparison between the friction data and the predicted braking profile. The control circuitry is further configured to cause the brake assistance system to increase a brake force of the driver-requested braking, ahead of the first point in time. With this aspect of the disclosed technology, similar advantages and preferred features are present as in the other aspects.

According to a fourth aspect, there is provided a vehicle. The vehicle comprises the computing device according to any embodiment of the third aspect. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that an increased speed reduction, especially in slippery road conditions, can be achieved, compared to what the driver-requested braking would otherwise achieve. This at least partly stems from achieving an earlier or harder braking than what the driver intends to apply.

Moreover, it may be advantageous in that an increased speed reduction, especially in slippery road conditions, can be achieved, compared to what the ABS system would otherwise achieve. More specifically, in cases where the friction limit can be determined, the disclosed technology can achieve a brake level just below that friction limit. This can thereby avoid the on-off behavior of the ABS, where there is no braking at all in the off-part.

An advantage of some embodiments is that it takes a proactive approach to dealing with slippery road conditions, which helps in utilizing the available friction in an optimized manner. More specifically, the disclosed technology can help in maximizing the braking effect of the vehicle leading up to the friction limit.

An advantage of some embodiments is that it can be adapted to specific drivers through learning from their typical braking behavior, which leads to a more personalized brake assistance system.

An advantage of some embodiments is that it can allow for more appropriate assistance levels tailored to a specific braking event, and current road surface properties, rather than applying a fixed assistance profile.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 is a schematic illustration of a vehicle, in accordance with some embodiments;
Figure 4 is a schematic illustration of a system, in accordance with some embodiments;
Figure 5 illustrates, by way of example, a graph of deceleration of a vehicle as a function of time.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first point in time could be termed a second point in time, and, similarly, a second point in time could be termed a first point in time, without departing from the scope of the embodiments. The first point in time and the second point in time are both points in time, but they are not the same point in time.

As used herein, the wording "one or more of" a set of elements (as in "one or more of A, Band C" or "at least one of A, Band C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and Band C, A and B, Band C, or A and C.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

### Overview

The disclosed technology relates to methods and devices for operating a brake assistance system of a vehicle. More specifically, the disclosed technology at least partly aims to provide improved braking, especially under slippery road conditions. Braking under slippery road conditions (i.e. in situations where the friction of the road surface is lower than usual or expected) can result in smaller achieved speed reduction than indented or expected. The technology behind Anti-lock Braking Systems (ABS) helps to some extent in releasing the brakes to prevent lock-up when slip is detected or imminent (i.e. when the braking force is reaching the limit of the available friction). By momentarily releasing the brakes just before the wheels begin to slide, traction between the tires and the road can be maintained, thereby preventing uncontrolled sliding and maintains steering control. However, releasing the brakes inherently leads to some degree of reduced speed reduction than intended. The disclosed technology presents a solution to mitigate this. In short, this can be achieved by increasing the braking of the driver in an initial braking stage (before reaching the friction limit), to enhance the effect of the driver-initiated deceleration, when it is predicted that the driver-initiated deceleration will not be attainable in view of a current friction available. Thereby, the available friction can be utilized to a larger extent than what the driver-requested braking would have done.

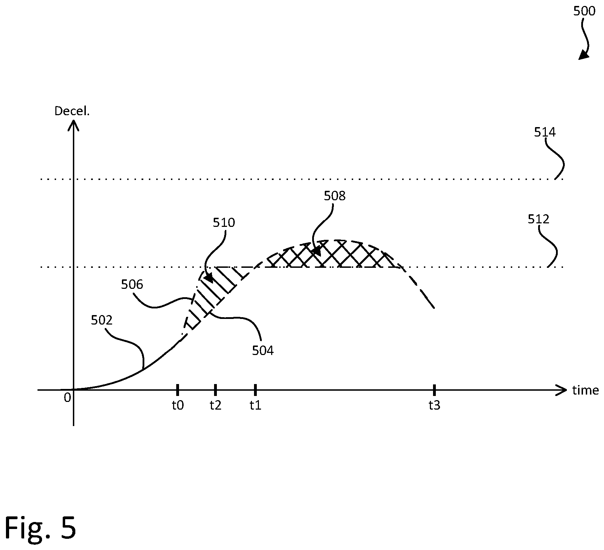

The effects of the disclosed invention can be visualized by the illustrative example of Fig. 5, which shows a graph of deceleration of a vehicle as a function of time. The curves illustrated herein can be seen as braking profiles, representing an amount of deceleration over time, during a braking event. The integral under such a curve (i.e. the total area under the curve) can be seen as the total braking effect from the point of initiating the braking (e.g. when the driver starts to press the brake pedal), up to a given point in time.

More specifically, the solid curve denoted 502 represents a measured actual braking profile of a driver-requested braking initiated by the driver. It starts at 0, and increases up to a current point in time t0. The dashed-line denoted 506 represents a predicted braking profile of the driver-requested braking from the current point in time t0, up to some future point in time t3. Thus, the curve 504 represents how the driver is expected to brake up until the future point in time t3.

The horizontal dotted lines denoted 512 and 514 represent two different friction limits. More specifically, the line denoted 514 may represent a nominal friction limit, i.e. a limit of the available friction during normal road conditions. This friction limit may e.g. be based on a friction of the road surface during dry conditions, as well as on a coefficient of friction of a tire of a vehicle.

In cases where the predicted braking profile 504 of the driver stays below the friction limit 514, the total braking effect of the driver can be achieved. Thus, in such case, the vehicle can brake according to the driver-requested braking.

However, in slippery road conditions, this friction limit may be lower than what the driver might expect. The line denoted 512 represents a current friction limit, and more specifically a reduced friction limit. As seen in the illustrated example of Fig. 5, the braking profile of the driver is predicted to overshoot the friction limit. In other words, the driver is predicted to brake harder than the current friction limit 512 allows. When a driver applies the brakes with more force than the current friction limit between the tires and the road allows, the tires can lose grip, leading to wheel slip or brake lock-up. This results in a loss of traction, reducing braking efficiency and compromising vehicle control - particularly steering, as sliding tires cannot effectively change direction. In vehicles equipped with anti-lock braking systems (ABS), the ABS system detects the impeding wheel lock-up and modulates brake pressure to restore traction and maintain steerability as far as possible. In other words, the ABS system triggers when the braking force reaches (or exceeds) the friction limit. In the illustrated example, this would occur at a first point in time t1, i.e. when the predicted braking profile 504 intersects with the current friction limit 512.

As a result of this, the area illustrated in cross-pattern and denoted 508, between the predicted braking profile 504 and the friction limit 512, corresponds to an unattainable braking effect or force. In other words, this area corresponds to a speed reduction which the driver expects but will not get. In reality, the deceleration of the vehicle will be capped (or saturated) around the friction limit 512. The friction limit may thus correspond to the maximum braking capacity.

According to the disclosed technology, when such a scenario is detected, the braking (i.e. the applied brake force) can be accelerated, ahead of the first point in time, compared to the predicted braking profile. Put differently, a modified braking profile, herein corresponding to the dash-dotted curve denoted 506, may be determined and executed. Braking according to the modified braking profile 506 may result in reaching the maximum braking capacity at an earlier point in time. More specifically, in the illustrated example, the friction limit is reached at a second point in time t2, before the first point in time t1. The increased braking according to the modified braking profile will then lead to a higher speed reduction than the predicted braking profile of the driver. This increased braking corresponds to the striped area denoted 510, between the modified braking profile 506 and the predicted braking profile 504 of the driver.

The modified braking profile 506 may be determined such that the area denoted 510 is (substantially) the same (or similar) to the area denoted 508. If the same, this means that the total braking effect expected by the driver is still achieved despite the current road conditions, as the loss of braking effect due to the current road conditions have been fully compensated for.

An additional effect of increasing the braking earlier than the driver is that the final speed reduction can be achieved in a shorter distance than if the predicted braking profile of the driver would have been successfully executed, thus giving the driver even more time to react to a potential danger or obstacle, which is the reason for braking.

The disclosed technology is at least partly achieved thanks to high-resolution friction data being made available through sensory systems of modern vehicles, and data-driven and sharing techniques across fleet of vehicles or cloud-based services.

### Embodiments

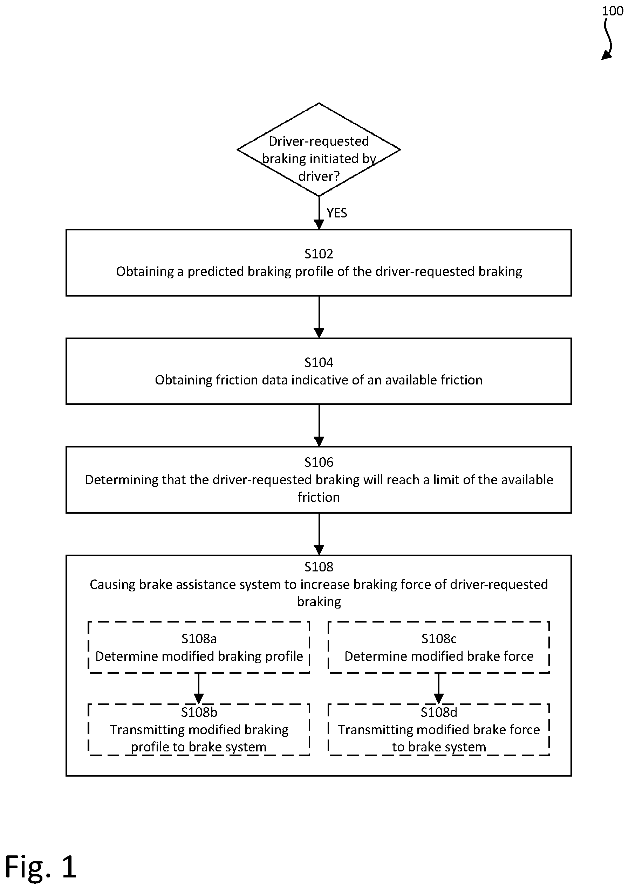

Hereinafter, various techniques for operating a brake assistance system to achieve the effects as described above in connection with Fig. 5 will be described in more detail with reference to Fig. 1 to 4.

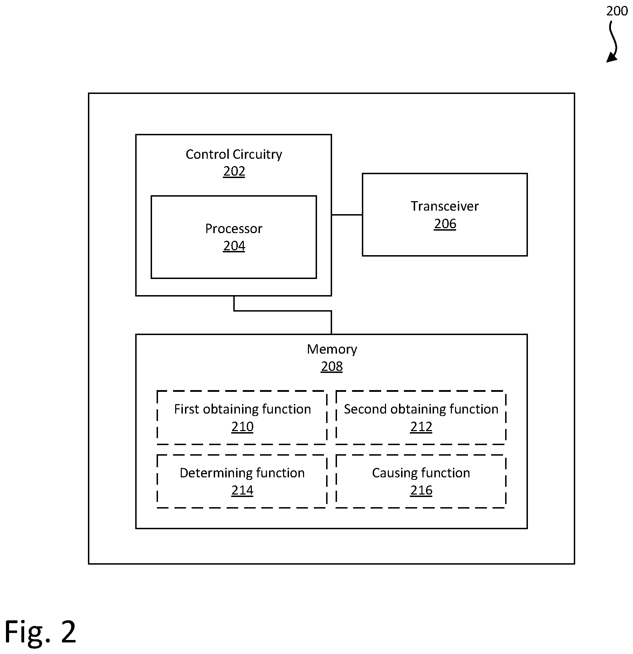

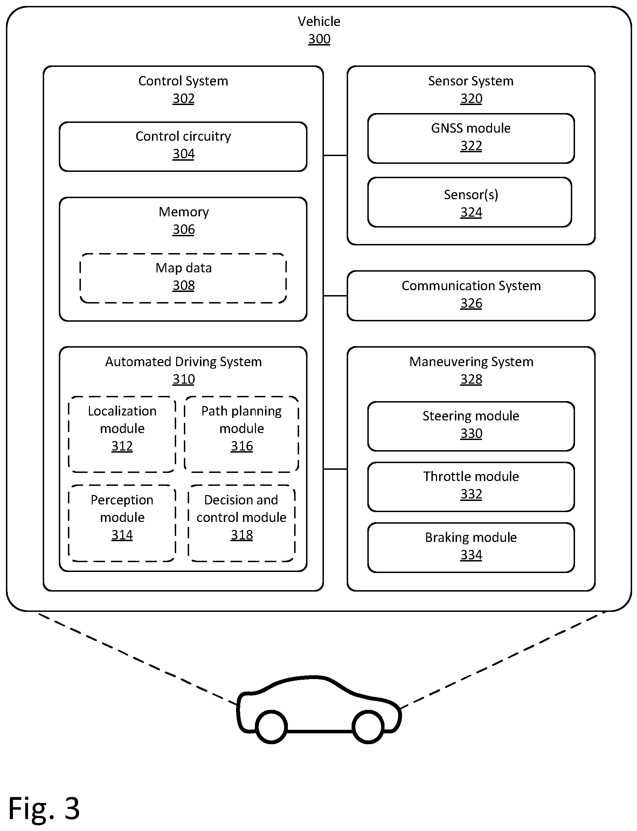

Figure 1 is a schematic flowchart representation of a computer-implemented method 100 for operating a brake assistance system of a vehicle. In other words, the method 100 can be seen as a method for providing assistive braking to a vehicle, driven by a driver. The method 100 may be performed by a computing device 200, as described below in connection with Fig. 2. The computing device 200 may be provided as part of the vehicle 300, as described below in connection with Fig. 3.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S102 and S104 may be performed independently of each other, and thus in any order, and/or with at least partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

It should be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination, unless otherwise stated or understood from the context.

The method 100 comprises, in response to a driver-requested braking being initiated by the driver, obtaining S102 a predicted braking profile of the driver-requested braking. In other words, the predicted braking profile may be obtained S102 after having detected that the driver has initiated the driver-requested braking.

The driver-requested braking being initiated by the driver may be seen as the braking force applied by the driver during a current braking event. The driver-requested braking initiated by the driver may be obtained from a brake pedal pressure applied by the driver. For example, the driver-requested braking may be detected after a brake pedal pressure has exceeded a first threshold value, and/or when an amount of time of applying a pressure on the brake pedal has exceeded a second threshold value. The driver-requested braking being initiated by the driver may be detected further in view of one or more environmental conditions relating to the surrounding environment of the vehicle. For example, sensor data pertaining to the surrounding environment may be processed to determine whether any braking target (such as an obstacle ahead of the vehicle) is detected in the surrounding environment.

As explained in the foregoing, with reference to Fig. 5, the predicted braking profile can be seen as any information indicative of how the driver is expected to brake, up until some future point in time. The braking profile may e.g. be an amount of brake force, applied by the driver through pressure on the brake pedal, over time during the current braking event. More specifically, the predicted braking profile may be indicative of a total deceleration of the vehicle expected by the driver, during the current braking event associated with the driver-requested braking.

A braking event may herein be understood as an instance during which the vehicle's braking system is actively engaged to reduce the speed of the vehicle or bring it to a stop, in view of a braking target. The braking event may thus refer to a point in time at which the braking is initiated (i.e. a brake actuation point), until the point in time at which the braking is ended. The braking profile thus characterizes the braking event by parameters such as brake force/pressure, deceleration rate, duration, etc.

Generally, a braking event may be initiated manually by a driver input (e.g. by pressing a brake pedal), automatically by a vehicle control system (e.g., an advanced driver-assistance system or emergency braking system), or through a combination of both.

The braking target may herein refer to any object, obstacle, environmental condition, or situational factor that serves as the reason for initiating the braking event. The braking target may e.g. be an obstacle or detected hazard ahead of the vehicle, which requires the vehicle to reduce its speed. For instance, the braking target may be a stationary or moving object, such as other vehicles, pedestrians, animals, or other road users. In another example, the braking target may refer to traffic regulations or traffic control elements, such as a change to a lower speed limit, traffic lights or stop signs. In yet another example, the braking target may refer to road infrastructure or roadway features, such as curves, intersections, inclines, etc., which may require a speed reduction of the vehicle.

The predicted braking profile can be determined through use of various data sources and techniques.

One approach to determining the predicted braking profile involves analyzing real-time characteristics of the driver's braking input. For example, the initial rate of depression of the brake pedal and the corresponding brake pressure buildup may be evaluated to infer the likely progression of braking. A rapid and forceful pedal actuation may indicate a high-deceleration and likely towards a full-stop of the vehicle, while a gradual input may suggest a more moderate braking for achieving a partial speed reduction. With reference to the example illustrated in Fig. 5, this approach may correspond to determining the predicted braking profile 504 based on the actual braking profile 502 up to the current point in time t0. More specifically, the predicted braking profile may be determined at a given point in time t0 after initiation of the driver-requested braking (starting at 0 in Fig. 5). The applied braking force from initiation to point in time t0 may be measured by onboard sensors of the vehicle. This measured actual braking profile may then be used in the prediction of the future braking profile.

Analyzing the real-time characteristics of the driver requested braking may be done through statistical and/or machine learning techniques. For example, the measured actual braking profile up to point t0 may be fed as input to a machine learning model, trained to output a corresponding prediction of the future braking profile. In more general terms, the predicted braking profile may be determined by processing data indicative of the driver-requested braking through a machine learning model trained to output a corresponding predicted braking profile. Said data may thus be the actual braking profile as measured up to the point t0. The time t0 can be used as a design parameter selected such that the prediction fulfills some accuracy/performance metric. There are many traditional curve-fit methods that are also applicable to find a suitable model.

Alternatively, or in combination with the above, the predicted braking profile can be determined based on historical driver behavior modelling. The driver behavior modelling can be done either for drivers in general or for a specific driver of the vehicle. Moreover, the driver behavior modelling can be based on historical recordings of how drivers in general (e.g. based on data recorded from a fleet of vehicles) or an individual driver (e.g. based on data recorded in vehicle(s) driven by said driver), has acted in similar scenarios or situations. More specifically, the driver behavior modelling may use data from previous braking events associated with the same driver or a set of drivers, preferably under similar driving and environmental conditions, and may be used to generate a predictive model of typical braking behavior. Such a model may be constructed using statistical and/or machine learning techniques. In some embodiments, driver identification techniques may be employed to access stored driver-specific profiles. These profiles may represent individualized braking characteristics and enable a more accurate prediction of the braking profile of the current driver. Thus, the predicted braking profile may be determined based on recorded driver behavior associated with the driver of the vehicle.

Alternatively, or in combination with the above, environmental and situational data may be used in determining the predicted braking profile. For instance, the current vehicle speed, distance to a detected braking target, or other characteristics relating to the braking target, may be used in predicting the braking profile of the driver. More specifically, the predicted braking profile may be determined based on a braking target of a current braking event associated with the driver-requested braking. By incorporating information relating to the braking target, the predicted braking profile can also be assessed in view of whether it achieves sufficient braking for the specific situation, e.g. in terms of avoiding a collision with the braking target.

It is to be noted that the predicted braking profile may be determined through any combination of the aspects described above. For instance, a machine learning model may be trained based on one or more of the above aspects, to generate the predicted braking profile. The machine learning model may for instance take as input perception data (e.g. raw or processed sensor data from camera/LiDAR/radar) and data indicative of the driver-requested braking (e.g. an applied brake pedal pressure), and output the predicted braking profile.

The predicted braking profile may be updated dynamically as the braking event progresses, and additional input data becomes available. The additional input data may e.g. be new/updated friction data. The new friction data may e.g. indicate a higher limit of the available friction, thus enabling a higher brake force to be applied before reaching the limit. Put differently, the amount of unattainable brake force may be reduced. In such case, the driver-requested braking may, at least to some extent, be more attainable. The opposite may also apply, i.e. the new friction data may indicate a lower available friction.

In another example, the additional input data may comprise perception data associated with the surrounding environment. For example, sensor data, which gives some information about the braking target (e.g. an object in the surrounding environment of the vehicle), may indicate that the need for braking is reduced (or increased). For instance, a leading vehicle which was previously braking ahead of the ego-vehicle, may have reduced its braking (or increased its acceleration). The conditions for the braking event may thus have changed.

If any such additional input data becomes available, the disclosed technology can adjust the applied brake force (e.g. adjust the modified braking profile) based on the new information. For instance, this can be done by adopting a less steep braking force ramp-up profile, to compensate for a now smaller unattainable braking effect. This can e.g. be done at any point ahead of reaching the friction limit (i.e. braking being saturated).

Generally, the step of obtaining S102 the predicted braking profile may comprise determining the predicted braking profile (e.g. in accordance with above) in the vehicle. In another example, obtaining S102 the predicted braking profile may comprise retrieving the predicted braking profile from a memory or other storage where it has been stored after being determined in accordance with above. In yet another example, obtaining S102 the predicted braking profile may comprise receiving the predicted braking profile from another entity having determined the predicted braking profile in accordance with above. It may e.g. be retrieved from a cloud-based service tasked with predicting the braking profile.

The method 100 further comprises obtaining S104 friction data indicative of an available friction in an area of the vehicle. Friction data can thus be seen as any information indicative of the available coefficient of friction between a road surface and the vehicle's tires in a specific area or region surrounding the vehicle. The friction data may pertain to a current location of the vehicle and/or to a predicted/future location along a planned driving path. The friction data may be represented by actual measured friction values or estimated friction values. As explained in the foregoing, the available friction may depend on the current road condition. A dry road surface may e.g. have a higher available friction than a wet, or icy, or snow-covered road surface.

The friction data may be determined locally by the vehicle using one or more onboard sensors, such as wheel speed sensors, acceleration sensors, yaw rate sensors, suspension movement sensors, or tire slip detectors. Alternatively, or additionally, onboard sensors such as camera(s), LiDAR sensor(s), radar sensor(s) etc. can be used to estimate the friction data by observations of the road surface. Put more generally, the obtained friction data may be determined based on sensor data captured by one or more onboard sensors of the vehicle. As is readily realized by the skilled person, the disclosed technology can be extended to leverage any existing and suitable techniques for determining friction data relating to a road surface.

Alternatively, or in combination with the above, the friction data may be obtained from external sources, such as road infrastructure systems, cloud-based services, or other vehicles. In other words, the friction data can be received via vehicle-to-vehicle (V2V) or vehicle-to-everything (V2X) communication. Such external sources may transmit friction-related reports based on their own sensor readings, aggregated environmental data, and/or weather reports. In other words, the obtained friction data may be received from a remote server and/or from one or more vehicles of a fleet of vehicles.

The method 100 further comprises determining S106 that the driver-requested braking will reach a limit of the available friction at a first point in time, based on a comparison between the friction data and the predicted braking profile. Put differently, an analysis of the friction data and the predicted braking profile is performed to determine whether the driver-requested braking will reach the friction limit. And if so, at what point in time. Thus, if the comparison between the friction data and the predicted braking profiles concludes in determining S106 that the limit of the available friction is reached at the first point in time, this can mean that the vehicle (more specifically its braking system) will not be capable of achieving the driver's desired brake force. In some cases, it can mean that one or more wheels of the vehicle will likely end up (or be close to end up) in a slip-condition. The step of determining S106 can thus be formulated as predicting a potential slip-condition of the vehicle.

An effect of the driver-requested braking reaching the limit of the available friction is that the braking effect (or speed reduction) expected by the driver will not be fully achieved. This may e.g. be a result of the driver having miscalculated the current road conditions, by expecting that the available friction is higher than it actually is. As mentioned above in connection with Fig. 5, the effective deceleration of the vehicle will instead be capped around the limit of the available friction. In fact, reaching this limit may trigger the Anti-lock Braking System (ABS) of the vehicle, which will release the brakes temporarily to avoid the wheels locking up.

The step denoted S106 may also be formulated as determining S106 whether (or detecting that) the driver-requested braking will reach the limit of the available friction, and if so at what point in time. This point in time is then referred to as the first point in time. In response to this check being affirmative, the next step of the method 100 (i.e. step S108 described below) can be performed.

The step of determining S106 may further comprise determining whether the driver-requested braking will be insufficient in view of the braking target (e.g. a detected obstacle ahead of the vehicle), in addition to the friction data. This may enable the method 100 to compensate for both the limit in friction and sufficiency for braking for the braking target in the subsequent step S108.

As explained in the foregoing, the limit of the available friction may correspond to a trigger point of activating the ABS system of the vehicle. In some embodiments, the step denoted S106 may be formulated as determining that the driver-requested braking will trigger an activation of the ABS system of the vehicle at a first point in time.

Reaching the limit of the available friction may correspond to applying a maximum braking capability. The maximum braking capability thus corresponds to the highest possible braking force that can be applied before exceeding the friction limit.

The method 100 further comprises causing S108 the brake assistance system to increase a brake force of the driver-requested braking, ahead of the first point in time. Thus, the applied brake force is increased relative to the driver-requested braking (or the predicted braking profile thereof). Put differently, the actual brake force applied to the brakes of the vehicle may be increased, compared to the brake force applied by the driver. As illustrated in the example of Fig. 5, the brake force may be increased such that the brake force applied to the brakes of the vehicle is larger than the predicted braking profile in each time point ahead of the first point in time. In some embodiments, the brake force may be increased such that the brake force applied to the brakes of the vehicle is larger than the predicted braking profile in at least one time point ahead of the first point in time.

Causing S108 the brake assistance system to increase the brake force may be seen as the brake assistance system causing a brake system of the vehicle to apply a brake force that is greater than the brake force requested by the driver. The brake assistance system may thus instruct (e.g. through sending a control signal to) the brake system of the vehicle.

The brake system may also be referred to as braking module. The brake system may herein be understood as the components of the vehicle responsible for generating and applying a physical brake force to reduce the speed of the vehicle. This includes, but is not limited to, hydraulic, electric, pneumatic, or mechanical actuators, and associated control elements directly responsible for actuating the vehicle's brakes in response to control signals. The brake assistance system may then be understood as a control system configured to assess driving conditions and determine whether an assistive braking action is required. Based on its inputs, the brake assistance system can be configured to generate control signals for the brake system in order to apply an increased braking force compared to the braking force requested by the driver. In other words, the brake assistance system can be seen as the control logic or decision-making entity for implementing the disclosed technology.

Increasing the brake force ahead of the first point in time can be done such that the effective deceleration of the vehicle is increased ahead of this point in time.

In some embodiments, the brake assistance system is caused S108 to increase the brake force of the driver-requested braking such that the limit of the available friction is reached at a second point in time, earlier than the first point in time. Thus, the maximum braking capability is reached earlier than predicted according to the predicted braking profile. This may provide for utilizing the available friction to a larger degree, to achieve higher deceleration than what otherwise would have been achieved. In some embodiments, the brake force may be increased to reach the limit of the available friction as early as possible, to achieve as high deceleration as possible.

The brake force may be increased up until the first point in time. After the first point in time, the braking of the vehicle may be performed according to the driver-requested braking.

The brake assistance system may be caused S108 to increase the brake force of the driver-requested braking such that the total deceleration of the vehicle expected by the driver is achieved. Put differently, the brake assistance system may increase the brake force by an amount corresponding to the unattainable brake effect, as explained in the foregoing in connection with Fig. 5.

Causing S108 the brake assistance system to increase the brake force of the driver-requested braking may comprise determining S108a a modified braking profile based on the predicted braking profile and the friction data, and transmitting S108b a signal indicative of the modified braking profile to a brake system of the vehicle. The brake system of the vehicle may then control the braking in accordance with the modified braking profile.

Causing S108 the brake assistance system to increase the brake force of the driver-requested braking may comprise determining an additional brake force, and transmitting a signal indicative of the additional brake force to the brake system of the vehicle. Thus, the vehicle may be controlled so to brake with the additional brake force in addition to the brake force applied by the driver.

More specifically, causing S108 the brake assistance system to increase the brake force of the driver-requested braking may comprise determining S108c a modified brake force as a sum of the brake force of the driver-requested braking and an additional brake force, and transmitting S108d a signal indicative of the modified brake force to a brake system of the vehicle.

The disclosed technology may be combined with strategies for pre-charging the brakes. Moreover, the functions of the disclosed technology can be turned on or off, or have its sensitivity adjusted, by the driver of the vehicle. Moreover, the disclosed technology may be combined with other threat assessment systems that evaluate and execute emergency braking of the vehicle.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Figure 2 is a schematic illustration of a computing device 200, in accordance with some embodiments of the disclosed technology. The computing device 200 may be configured to perform the method 100 as described in connection with Fig. 1. Thus, the computing device 200 may thus be a computing device 200 for operating a brake assistance system of a vehicle.

The computing device 200 as described herein, refers to a computer system, or any device or general computing system configured to perform various functions. Even though the computing device 200 is herein illustrated as one device, the computing device 200 may be a distributed computing system, formed by a number of different devices. Moreover, the computing device may be provided as part of a vehicle, such as the vehicle 300 as described below in connection with Fig. 3. More specifically, the computing device 200 may be provided as an integral part of the brake assistance system. Alternatively, the computing device 200 may be provided externally to the brake assistance system. In such case, the computing device 200 may be communicatively connected to the brake assistance system, to enable the computing device 200 to e.g. send control instructions to the brake assistance system.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as other devices or systems in the vehicle, with other vehicles (i.e. V2V communication) or other external devices/systems/servers (i.e. V2X communication). The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to, in response to a driver-requested braking being initiated by the driver, obtain a predicted braking profile of the driver-requested braking. This may be performed e.g. by execution of a first obtaining function 210.

The control circuitry 202 is further configured to obtain friction data indicative of an available friction in an area of the vehicle. This may be performed e.g. by execution of a second obtaining function 212. It is to be noted that the first and second obtaining function 210, 212 may as well be implemented as a common obtaining function.

The control circuitry 202 is further configured to determine that the driver-requested braking will reach a limit of the available friction at a first point in time, based on a comparison between the friction data and the predicted braking profile. This may e.g. be performed by execution of a determining function 214.

The control circuitry 202 is further configured to cause the brake assistance system to increase a brake force of the driver-requested braking, ahead of the first point in time. This may e.g. be performed by execution of a causing function 216.

It should be noted that the principles, features, aspects, and advantages of the method 100 as described above in connection with Fig. 1, are applicable also to the computing device 200 as described herein. In order to avoid undue repetition, reference is made to the above. Hence, the control circuitry may be configured to perform any of the steps as described as part of the method 100.

Figure 3 is a schematic illustration of a vehicle 300 in accordance with some embodiments. The vehicle 300 may be equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc. The vehicle 300 is configured to perform the steps of the method 100 as described above. Put differently, the computing device 200 may be provided as part of the vehicle 300. Thus, any principles, features, aspects, and advantages of the method 100 or the computing device 200 as described above in connection with Fig. 1 and 2, are applicable also to the vehicle as described herein.

The vehicle 300 comprises a number of elements which can be commonly found in automated or semi-automated vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data. The map data 308 may further comprise standard-definition (SD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as one or more image sensors (i.e. cameras), LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

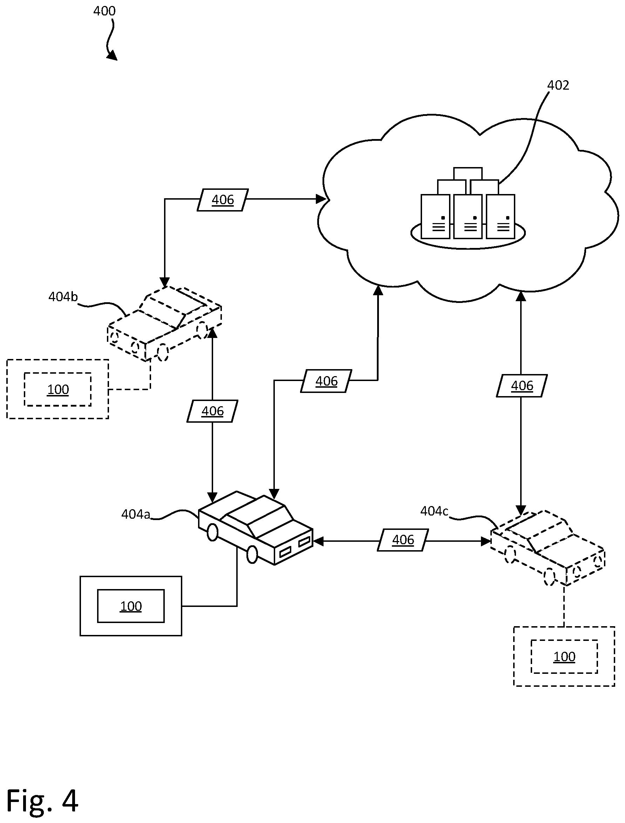

The vehicle 300 further comprises a communication system 326. The communication system 326 is configured to communicate with external units, such as other vehicles (i.e. via vehicle-to-vehicle (V2V) communication protocols), remote servers (e.g. as described below in connection with Fig. 4), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote server, operator or control center) by means of the one or more antennas. Moreover, the communication system 326 may be further configured to allow the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As mentioned above, the vehicle 300 comprises an ADS 310. The ADS 310 may be part of the control system 302 of the vehicle. The ADS 310 is configured to carry out the functions and operations of the automated functions of the vehicle 300. The ADS 310 can comprise a number of modules, where each module is tasked with different functions of the ADS 310.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS.

Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while AD systems aim to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth. The disclosed technology is applicable to any vehicle equipped with an ADS. In other words, the disclosed technology find applicability in both autonomous vehicles (i.e. vehicles capable of operating in fully autonomous mode, without human intervention) and semi-autonomous vehicles (i.e. vehicles being capable of operating at the lower autonomy levels, such as driver assistance functions).

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300. The planned path determined by the path planning module 316 may be sent to the maneuvering system 328 for execution.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316.

The vehicle 300 is further provided with a brake assistance system (or brake assistance function). The brake assistance system may be implemented as part of the ADS 310. The brake assistance function may then transmit control signals (e.g. the modified brake profile or a modified brake force) to the braking module 334 of the vehicle 300. In some embodiments, the brake assistance system may be provided as part of the braking module 334. In some other embodiments, the brake assistance system may be provided as a stand-alone system within the vehicle 300. As explained in the foregoing, the computing device 200 may then either be implemented as part of the brake assistance system, or as a separate module/system external to the brake assistance system.

It should be understood that parts of the disclosed technology may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein.

Figure 4 illustrates, by way of example, a system 400 according to some embodiments. More specifically, a system 400 being configured to implement the principles of the presently disclosed technology. The system 400 should therefore be seen as a non-limiting example of a realization of the herein disclosed aspects of the present technology. For instance, the system 400 may be configured to perform the method 100 described in connection with Fig. 1. Thus, any features or principles described above are applicable also to the system 400 as described herein, and vice versa.

The system 400 comprises a server 402 (or remote, cloud, central, back-office, fleet, or back-end server), referred to in the following as the remote server 402 or just server 402. The system 400 further comprises one or more vehicles 404a-c, also referred to as a fleet of vehicles 404a-c.

As illustrated, the server 402 may be provided in the cloud, i.e. as a cloud-implemented server. Advantageously, the server 402 may manage and maintain data relevant for a fleet of vehicles (further described below), or manage and coordinate the fleet of vehicles, such as aggregating data from, or distributing data to, the different vehicles of the fleet, updating ADS functions and distributing the updates to the fleet, etc. In particular, the server 402 may be configured to provide the fleet of vehicles with the friction data described in the foregoing. The server 402 may source the friction data based on reports from some vehicles of the fleet of vehicles, and distribute it to other vehicles of the fleet of vehicles. As another example, the server 402 may provide the vehicles of the fleet of vehicles 404a-c with the machine learning model trained to output predicted braking profiles. The machine learning model may be trained on the server 402. Moreover, the server 402 may provide some steps associated with the method 100 described above. For instance, the server may determine the predicted braking profile of a driver-requested braking initiated by the driver of a vehicle, and transmit this to said vehicle. Thus, the vehicle may be able to offload some computational tasks to the server 402.

The one or more vehicles 404a-c may be vehicles 300 as described above in connection with Fig. 3. The one or more vehicles 404a-c may thus be configured to perform the method 100 described above in connection with Fig. 1. The fleet illustrated in Fig. 4 comprises three vehicles, a first, second and third vehicle 404a-c, by way of example. The system 400 may however comprise any number of vehicles 404a-c. Any aspects or principles described in connection with any of the vehicles apply also to the remaining vehicles of the fleet of vehicles 404a-c.

The one or more vehicles 404a-c are communicatively connected to the remote server 402. This may provide for transmitting and/or receiving data 406 between the vehicles and the server. The one or more vehicles 404a-c may be further communicatively connected to each other. The data 406 may be any kind of data, such as communication signals, control signals, system updates, environmental data, etc. More specifically, the data 406 may comprise friction data, obtained in the different vehicles.

The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area Network (WLAN) (e.g. IEEE 802.11) based solutions. The sever 402 comprises a suitable memory and control circuitry, for example, one or more processors or processing circuitry, as well as one or more other components such as a data interface and transceiver. The server 402 may also include software modules or other components, such that the control circuity can be configured to execute machine-readable instructions loaded from memory to implement the steps of the method to be performed.

The disclosed technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for operating a brake assistance system of a vehicle, the method (100) comprising:
in response to a driver-requested braking being initiated by the driver, obtaining (S102) a predicted braking profile of the driver-requested braking;
obtaining (S104) friction data indicative of an available friction in an area of the vehicle;
determining (S106) that the driver-requested braking will reach a limit of the available friction at a first point in time, based on a comparison between the friction data and the predicted braking profile, and
causing (S108) the brake assistance system to increase a brake force of the driver-requested braking, ahead of the first point in time.

2. The method (100) according to claim 1, wherein the brake assistance system is caused (S108) to increase the brake force of the driver-requested braking such that the limit of the available friction is reached at a second point in time, earlier than the first point in time.

3. The method (100) according to claim 1 or 2, wherein the predicted braking profile is indicative of a total deceleration of the vehicle expected by the driver, during a current braking event associated with the driver-requested braking.

4. The method (100) according to claim 3, wherein the brake assistance system is caused (S108) to increase the brake force of the driver-requested braking such that the total deceleration of the vehicle expected by the driver is achieved.

5. The method according to any one of the claims 1 to 4, wherein the predicted braking profile is determined by processing data indicative of the driver-requested braking through a machine learning model trained to output a corresponding predicted braking profile.

6. The method according to any one of the claims 1 to 5, wherein the predicted braking profile is determined based on recorded driver behavior associated with the driver of the vehicle.

7. The method (100) according to any one of the claims 1 to 6, wherein the predicted braking profile is determined based on a braking target of a current braking event associated with the driver-requested braking.

8. The method according to any one of the claims 1 to 7, wherein reaching the limit of the available friction corresponds to applying a maximum braking capability.

9. The method according to any one of the claims 1 to 8, wherein the limit of the available friction corresponds to a trigger point of activating an anti-lock braking system of the vehicle.

10. The method according to any one of the claims 1 to 9, wherein the brake force is increased up until the first point in time.

11. The method according to any one of the claims 1 to 10, wherein causing (S108) the brake assistance system to increase the brake force of the driver-requested braking comprises:
determining (S108a) a modified braking profile based on the predicted braking profile and the friction data, and
transmitting (S108b) a signal indicative of the modified braking profile to a brake system of the vehicle.

12. The method according to any one of the claims 1 to 10, wherein causing (S108) the brake assistance system to increase the brake force of the driver-requested braking comprises:
determining (S108c) a modified brake force as a sum of the brake force of the driver-requested braking and an additional brake force; and
transmitting (S108d) a signal indicative of the modified brake force to a brake system of the vehicle.

13. A computer program product comprising instructions, which when the program is executed by a computing device, causes the computing device to carry out the method (100) according to any one of the claims 1 to 12.

14. A computing device (200) for operating a brake assistance system of a vehicle, the computing device (200) comprising control circuitry (202) configured to:
in response to a driver-requested braking being initiated by the driver, obtain a predicted braking profile of the driver-requested braking;
obtain friction data indicative of an available friction in an area of the vehicle;
determine that the driver-requested braking will reach a limit of the available friction at a first point in time, based on a comparison between the friction data and the predicted braking profile, and
cause the brake assistance system to increase a brake force of the driver-requested braking, ahead of the first point in time.

15. A vehicle (300) comprising a computing device (200) according to claim 14.
